# EUROPÄISCHE PATENTANMELDUNG

(11) **EP 4 512 784 A1**
(43) Veröffentlichungstag der Anmeldung: **26.02.2025**
(21) Anmeldenummer: 23193576.8
(22) Anmeldetag: 25.08.2023
(51) Int. Cl.: C03B 23/023, C03C 10/00

(54) **VERFAHREN ZUR HERSTELLUNG VON GEBOGENEN GLASKERAMIKSCHEIBEN SOWIE GEBOGENE GLASKERAMIKSCHEIBEN**

(71) Anmelder: SCHOTT AG, 55122 Mainz (DE)
(72) Erfinder: MUEHLKE, Oliver, 55122 Mainz (DE); HASELHORST, Georg, 55122 Mainz (DE); METTEN, Stefani, 55122 Mainz (DE)
(74) Vertreter: Schott Corporate IP

(57) **Zusammenfassung**

Die Erfindung betrifft eine gebogene Glaskeramikscheibe, insbesondere als Sichtscheibe für einen Kaminofen, mit einer ersten Seitenfläche, einer zweiten Seitenfläche und einem Mittenbereich, wobei die Glaskeramikscheibe zumindest einen einfach gebogenen Abschnitt aufweist. An den gebogenen Abschnitt schließen sich zwei ebene Flächen an, die aufgrund der Verbindung über den gebogenen Abschnitt zueinander einen Winkel α von wenigstens 20° und höchstens 175° einschließen. Die Glaskeramikscheibe enthält Zinnoxid und weist im Bereich der ebenen Flächen auf der ersten Seitenfläche, der zweiten Seitenfläche oder auf beiden Seitenflächen in einem Abstand von wenigstens 10 mm zum Biegebereich wenigstens abschnittsweise eine native Oberfläche auf. Im gebogenen Abschnitt weist die Glaskeramikscheibe einen lichtmikroskopischen Oberflächenkristall-Belegungsgrad von weniger als 20 % und vorzugsweise mehr als 0,01 % aufweist. Darüber hinaus betrifft die Erfindung ein Verfahren zum Herstellen einer solchen Glaskeramikscheibe, bei dem der Biegebereich mittels eines Lasers erwärmt wird.

## Beschreibung

### Gebiet der Erfindung

Im Allgemeinen betrifft die Erfindung ein Verfahren zur Herstellung von gebogenen Glaskeramikscheiben bzw. -platten sowie die entsprechenden gebogenen Platten.

### Stand der Technik

Gebogene, scheiben- bzw. plattenförmige Glaskeramikartikel finden vielfältige Anwendungsmöglichkeiten. So werden beispielsweise gebogene Glaskeramikscheiben als Kaminsichtscheiben verwendet. Die Glaskeramiken werden hierbei durch Keramisierung des entsprechenden Grünglases erhalten. Hierbei wird das Grünglas zunächst aus den benötigten Ausgangsstoffen erschmolzen.

Unter einem Grünglas versteht man dabei ein Glas, das durch ein Keramisierungsverfahren in eine Glaskeramik umgewandelt werden kann. Grünglas wird im Folgenden auch als keramisierbares Glas bezeichnet.

Die Begriffe "Scheibe" beziehungsweise "Platte" werden im Folgenden als Synonyme verwendet. Sie beschreiben Erzeugnisse aus Grünglas oder Glaskeramik, die in der Heißformgebung mittels Walzen hergestellt wurden. Solche Erzeugnisse weisen zumindest abschnittsweise einen ebenen Bereich und eine Dicke auf, wobei die Dicke geringer ist als die laterale Erstreckung des ebenen Bereichs.

Bei der Glasherstellung werden die einzelnen Glaskomponenten mit Läutermitteln versetzt, um eine Blasenbildung im Glas zu vermeiden. In der Vergangenheit wurden zur Herstellung von Grüngläsern für Glaskeramiken Läutermittel wie Arsen- oder Antimonoxid eingesetzt, welche zwar eine gute Läuterwirkung aufweisen, jedoch auf Grund ihrer Toxizität insbesondere in Hinblick auf ihre Umweltverträglichkeit problematisch sind. Daher wurden diese Läutermittel substituiert, wobei sich Zinnoxid insbesondere zur Läuterung von Grüngläsern als besonders geeignet herausgestellt hat.

Das geschmolzene Glas wird im Zuge der Heißformgebung durch bekannte Walzverfahren zu Grünglasscheiben bzw. -platten in der gewünschten Dicke verarbeitet. Bei der Herstellung von gebogenen Glaskeramikscheiben werden die gewalzten Glasscheiben zunächst erwärmt und durch Biegen des erwärmten Bereichs bzw. der erwärmten Bereiche in Form gebracht. Anschließend wird die gebogene Scheibe aus Grünglas durch ein Keramisierungsverfahren in eine Glaskeramik umgewandelt.

Bei gewalzten, zinnoxid-haltigen Grüngläsern führt ein entsprechender Biegeprozess jedoch zur Ausbildung einer sichtbaren Trübung der Glaskeramik in den gebogenen Bereichen.

Im Stand der Technik wird dieses Problem dadurch gelöst, dass die gewalzten Glasplatten vor dem Biegeprozess mechanisch poliert werden. Durch die mechanische Politur wird die Rauheit Ra der Oberfläche der Glasplatten auf einen Wert von weniger als 0,02 µm reduziert. Um die Ausbildung der Trübung zu vermeiden, müssen beide Seiten der Glasscheibe poliert werden. Nachteilig an dieser Vorgehensweise ist jedoch, dass hierbei in der Praxis mikroskopische Polierriefen an der Oberfläche des Glases entstehen. Ein weiterer Nachteil liegt darin, dass ein zusätzlicher Verfahrensschritt angewendet werden muss. Zudem ist die Politur sehr zeitaufwändig und kann somit in der Produktion gebogener Scheiben einen erheblichen Kostenfaktor darstellen. Darüber hinaus haben polierte Scheiben den Nachteil, dass Kratzer, die während der Herstellung oder der Verwendung auftreten können, deutlicher sichtbar sind als bei unpolierten Platten.

### Aufgabe der Erfindung

Der Erfindung liegt die Aufgabe zu Grunde, ein Verfahren zur Herstellung von zinnoxid-haltigen, gebogenen Glaskeramikplatten bereitzustellen, welches die aus dem Stand der Technik bekannten Nachteile nicht aufweist. Eine weitere Aufgabe der Erfindung liegt in der Bereitstellung einer zinnoxid-haltigen, gebogenen Glaskeramikplatte.

### Kurzbeschreibung der Erfindung

Die Aufgabe der Erfindung wird bereits durch den Gegenstand der unabhängigen Ansprüche gelöst. Vorteilhafte Ausführungsformen und Weiterbildungen sind Gegenstände der Unteransprüche.

Das erfindungsgemäße Verfahren zur Herstellung einer gebogenen Glaskeramikscheibe, die zumindest zwei ebene Flächen aufweist, die zueinander geneigt sind und an einen gebogenen Abschnitt angrenzen, wobei die Glaskeramikscheibe im Bereich der ebenen Flächen in einem Abstand von wenigstens 10 mm zum gebogenen Abschnitt wenigstens abschnittsweise eine native Oberfläche, vorzugsweise mit einer Rauheit Ra von 0,02 - 0,5 µm, aufweist und wobei die Glaskeramikscheibe im gebogenen Abschnitt einen lichtmikroskopischen Oberflächenkristall-Belegungsgrad von weniger als 20 % aufweist, umfasst zumindest die folgenden Schritte in der angegebenen Reihenfolge:
a) Bereitstellung einer keramisierbaren Glasscheibe mit einer Dicke von zumindest 2 mm, die Zinnoxid enthält,
b) optional Erwärmung der Glasscheibe auf eine Temperatur T unterhalb der Erweichungstemperatur der Glasscheibe,
c) Erwärmung eines sich von einer Kante auf die gegenüberliegende Kante erstreckenden Streifens der Glasscheibe mittels eines Lasers mindestens bis zur Erweichungstemperatur der Glasscheibe,
d) Biegen der Glasscheibe am erwärmten Streifen, so dass am Streifen eine Krümmung entsteht, so dass der Bereich der Krümmung einen gebogenen Abschnitt darstellt und die an den gebogenen Abschnitt angrenzenden ebenen Flächen zueinander geneigt sind, wobei die Glasscheibe so weit gebogen wird, bis die zwei ebenen Flächen zueinander einen Winkel α von wenigstens 20° und höchstens 175° einschließen,
e) Umwandeln der gebogenen Glasscheibe in eine gebogene Glaskeramikscheibe.

In Schritt a) wird eine keramisierbare Glasscheibe bereitgestellt. Die Scheibe hat eine Dicke von zumindest 2 mm und enthält Zinnoxid (SnO₂). Gebogene Scheiben aus Glaskeramik werden häufig als Kaminsichtscheiben eingesetzt. Hierfür eignen sich besonders Dicken von beispielsweise 3 mm, 3,5 mm, 4 mm, 4,5 mm, 5 mm, 5,5 mm, 6 mm oder 6,5 mm. Die Scheibe sollte vorzugsweise nicht dicker als 10 mm sein. Je dicker die Scheibe ist, desto länger dauert das Aufheizen und desto mehr Energie wird für das Aufheizen benötigt. Beides ist wirtschaftlich nachteilig. Dünnere Scheiben haben tendenziell eine geringere mechanische Festigkeit. In einer Weiterbildung der Erfindung hat die Scheibe deshalb eine Dicke von 2 mm bis 10 mm, bevorzugt von 2,5 mm bis 8 mm, besonders bevorzugt von 3 mm bis 7 mm oder sogar von 3,5 mm bis 6,5 mm.

In einer Weiterbildung der Erfindung enthält die Glasscheibe 0,01 bis 0,9 Gew.-% Zinnoxid, bevorzugt 0,02 bis 0,6 Gew.-%, besonders bevorzugt 0,04 bis 0,5 Gew.-%, oder sogar 0,06 bis 0,3 Gew.-%. In diesen Mengen ist das Zinnoxid in der Schmelze als Läutermittel wirksam. Beim Überschreiten dieser Mengen kann es jedoch zur unerwünschten Entglasung während der Heißformgebung kommen.

In Schritt b) wird die Scheibe optional auf eine Temperatur T unterhalb der Erweichungstemperatur erwärmt, bevor in Schritt c) der zu biegende Bereich lokal weiter erhitzt wird. Dieser Schritt kann zum einen dafür sorgen, dass das Aufheizen auf die zum Biegen benötigte Temperatur in Schritt c) kürzer dauert, da dann in Schritt c) nur noch die Differenz zur Biegetemperatur überwunden werden muss. Gleichzeitig wird durch ein Erwärmen der Platte vor dem lokalen Erhitzen die thermische Spannung in der Glasscheibe reduziert, da dann in Schritt c) nur geringere Temperaturgradienten innerhalb der Platte auftreten. Hierdurch wird das Risiko von Glasbruch während oder nach dem Biegen reduziert.

Vorzugsweise wird die Platte in Schritt b) auf eine Temperatur aufgeheizt, die höchstens 400 °C, vorzugsweise höchstens 300 °C, besonders bevorzugt höchstens 200 °C niedriger als die Erweichungstemperatur ist. Dadurch wird das Risiko von Spannungsbrüchen weiter reduziert. Je größer das Format der zu biegenden Platte, desto kleiner sollte die Temperaturdifferenz zwischen der Erwärmungstemperatur aus Schritt b) und der Biegetemperatur aus Schritt c) sein.

In Schritt c) wird ein Streifen der Glasscheibe mittels eines Lasers mindestens bis zur Erweichungstemperatur erhitzt. Der Streifen erstreckt sich von einer Kante auf die gegenüberliegende Kante der Glasscheibe.

Die Breite des Streifens senkrecht zu seiner Erstreckung ist geringer als die Breite der Scheibe in dieser Richtung. Vorzugsweise beträgt die Breite weniger als 50 %, weniger als 30 %, weniger als 20 %, weniger als 10 % oder sogar weniger als 5 % der Breite der Scheibe in dieser Richtung. Die Breite kann abhängig davon gewählt werden, welchen Radius die Krümmung im gebogenen Bereich aufweisen soll.

Die gebogene Glaskeramikscheibe weist vorzugsweise einen äußeren Biegeradius des gebogenen Abschnitts von weniger als 100 mm, vorzugsweise weniger als 70 mm, besonders bevorzugt weniger als 50 mm, noch mehr bevorzugt weniger als 30 mm und mindestens das 1,5-fache der Dicke der Scheibe, vorzugsweise mindestens das 2-fache der Dicke der Scheibe auf.

Die Erweichungstemperatur der Glasscheibe ist die Temperatur, bei der die Viskosität des Glases so niedrig ist, dass sich die Scheibe unter ihrem eigenen Gewicht verformen kann. Sie ist auch unter dem Begriff Erweichungspunkt, E_{w}, bekannt. Der genaue Wert hängt von der Zusammensetzung des Grünglases ab.

Die erfindungsgemäße Ausführungsform des Verfahrens sieht vor, dass als lokale Heizquelle für den zu biegenden Abschnitt der Glasscheibe ein Laser verwendet wird. Überraschenderweise hat sich gezeigt, dass es durch Aufheizen mittels eines Lasers möglich ist, eine gebogene Glaskeramikplatte herzustellen, die Zinnoxid enthält, aber trotzdem im Bereich der Biegung keine Trübung aufweist. Somit ist der aus dem Stand der Technik bekannte zusätzliche Schritt des Polierens der Platte vor dem Biegen nicht mehr erforderlich.

Die Verwendung eines Lasers als lokale Heizquelle zur Erwärmung des Glases im Bereich des Streifens ist darüber hinaus vorteilhaft, da mit einem Laser das Glas innerhalb einer relativ kurzen Zeit auf die für den Biegeprozess benötigte Temperatur aufgeheizt werden kann. Außerdem ist der Energieeintrag mittels Laser und entsprechender Strahlführung sehr gut räumlich und zeitlich einstell- und steuerbar.

Als besonders vorteilhaft hat sich dafür die Verwendung eines CO₂-Lasers herausgestellt. Es können aber auch andere Laser mit ausreichender Leistungsdichte verwendet werden, beispielsweise Diodenlaser.

In einer Weiterbildung der Erfindung wird in Schritt c) ein CO₂-Laser oder ein Diodenlaser als Laser verwendet. Die Verwendung eines CO₂-Lasers ist bevorzugt, weil die Wellenlänge von CO₂-Lasern durch Grüngläser sehr stark absorbiert wird. Somit ist ein besonders effizientes Aufheizen möglich. Aufgrund der sehr starken Absorption findet der Energieeintrag aber hauptsächlich an der Oberfläche des Glases statt. Die Strahlung von Diodenlasern wird in der Regel weniger stark absorbiert als die von CO₂-Lasern. Das reduziert zwar die Effizienz. Gleichzeitig wird aber die Strahlung entlang einer größeren Eindringtiefe, also homogener entlang der Dicke des Glases, absorbiert. Es resultiert ein homogeneres Aufheizen im Vergleich zu CO₂-Lasern.

In einer weiteren Weiterbildung der Erfindung wird in Schritt c) der Streifen der Glasscheibe mit einer mittleren Flächenleistung des Lasers von 20 bis 250 W/cm², bevorzugt von 30 bis 200 W/cm² aufgeheizt. Die vom Laser eingestrahlte Leistung ist dabei bezogen auf die insgesamt bestrahlte Fläche der Scheibe. In diesem Bereich der Flächenleistung ist es möglich, die Glasscheibe schnell aufzuheizen. Gleichzeitig kann in diesem Bereich eine Überhitzung der Oberflächen vermieden werden und die Wahrscheinlichkeit von Glasbruch durch thermische Spannungen begrenzt werden.

Prinzipiell kann der Laser von einer Seite oder von beiden Seiten auf die zu biegende Scheibe eingestrahlt werden. Bei beidseitiger Bestrahlung kann entlang der Dicke des Glases ein gleichmäßigeres und schnelleres Aufheizen erreicht werden als bei einseitiger Einstrahlung. Dies kann insbesondere bei Lasern, deren Strahlung sehr oberflächennah absorbiert wird, vorteilhaft sein. Dies ist beispielsweise bei CO₂-Lasern der Fall. Dadurch kann außerdem eine lokale Überhitzung der Oberfläche leichter vermieden werden.

Aus anlagentechnischen Gründen kann es jedoch einfacher sein, den Laserstrahl nur einseitig auf die Glasscheibe einzustrahlen. In einem solchen Fall hat es sich als vorteilhaft erwiesen, den Strahl nicht auf der Seite einzustrahlen, die nach dem Biegen den Winkel α einschließt, sondern von der gegenüberliegenden Seite. Hierdurch ist eine einfachere Einstellung des gebogenen Bereichs möglich, insbesondere bei größeren Biegeradien. Ein Einstrahlen von der den Winkel einschließenden Seite ist aber alternativ auch möglich.

In Schritt d) wird die Glasscheibe so gebogen, dass der Winkel α zwischen den beiden ebenen Flächen zueinander wenigstens 20° und höchstens 175° beträgt. In einer Weiterbildung der Erfindung schließen die beiden ebenen Flächen einen Winkel α von 55° bis 160°, bevorzugt von 80° bis 145° und besonders bevorzugt von 85° bis 140° ein.

In Schritt e) der Erfindung wird die Glasscheibe in eine Glaskeramikscheibe überführt. Im Keramisierungsofen wandelt sich das Glas der Glasscheibe in eine Glaskeramik um. Verfahren zur Umwandlung von Grüngläsern in Glaskeramiken durch Keramisierung sind dem Fachmann bekannt. Die genauen Parameter hängen unter anderem von der Zusammensetzung des Grünglases, der Dicke der Platte und der Art des Keramisierungsofens ab. Generell sollte während der Keramisierung eine Temperatur von ca. 950 °C nicht überschritten werden. Bei Temperaturen von mehr als 950 °C kann es zur Umwandlung der bei niedrigeren Temperaturen gebildeten Hochquarz-Mischkristalle in Keatit-Mischkristalle kommen. Keatit-Mischkristalle führen zu einer Trübung der Glaskeramik und sind deshalb im Falle der vorliegenden Erfindung unerwünscht.

Gemäß einer Weiterbildung der Erfindung wird in Schritt e) die Glasscheibe in eine Form mit zwei zueinander gewinkelten Auflageflächen eingelegt, so dass die Glasscheibe mit ihren ebenen Flächen auf den Auflageflächen aufliegt und mit der Form zusammen durch einen Keramisierungsofen geführt werden kann.

Um eine Glaskeramikscheibe mit mehr als zwei ebenen Flächen und mehr als einem gebogenen Abschnitt herzustellen, können die Schritte c) und d) vor der Durchführung von Schritt e) entsprechend wiederholt werden. Alternativ können in Schritt c) mehrere Streifen gleichzeitig erhitzt und anschließend in Schritt d) gleichzeitig gebogen werden. Für die Durchführung von Schritt e) können dann Formen verwendet werden, bei denen alle ebenen Flächen entsprechend aufliegen und die gebogenen Abschnitte entsprechend gestützt werden.

Mittels des erfindungsgemäßen Verfahrens ist es erstmals möglich, eine gebogene Glaskeramikscheibe bereitzustellen, die Zinnoxid enthält, im Bereich der ebenen Flächen wenigstens abschnittsweise eine native Oberfläche mit einer Rauheit Ra von 0,02 - 0,5 µm und gleichzeitig einen lichtmikroskopischen Oberflächenkristall-Belegungsgrad von weniger als 20 % im gebogenen Bereich aufweist. Es ist sogar möglich, gebogene Glaskeramikscheiben herzustellen, die einen Oberflächenkristall-Belegungsgrad von weniger als 15 %, weniger als 10 %, weniger als 5 % oder sogar weniger als 2 % aufweisen. Je niedriger der Oberflächenkristall-Belegungsgrad ist, desto geringer ist die wahrnehmbare Trübung des gebogenen Bereichs.

Unter einer nativen Oberfläche wird dabei eine Oberflächenstruktur verstanden, die aus der Herstellung mittels Walzen resultiert und keine Merkmale nachfolgender Oberflächenbehandlungen, insbesondere keine Polierriefen, aufweist. Vorzugsweise weist die Glaskeramikfläche auf mehr als der Hälfte, besonders bevorzugt auf der gesamten Fläche der ebenen Flächen eine native Oberfläche auf.

Die Rauheit Ra ist als arithmetischer Mittenrauwert gemäß DIN EN ISO 4287:1998 zu bestimmen. Dafür kann beispielsweise ein Perthometer M1 der Firma Mahr GmbH verwendet werden. Die Messung des Rauheitsprofils erfolgt entlang einer Taststrecke von 17,5 mm. Diese Taststrecke wird in sieben jeweils 2,5 mm lange Abschnitte zerlegt ("Cutoff"). Der erste und letzte Abschnitt werden verworfen. Für die übrigen fünf Abschnitte wird jeweils der Mittenrauwert bestimmt. Die fünf so bestimmten Mittenrauwerte werden arithmetisch gemittelt zum arithmetischen Mittenrauwert Ra.

Der lichtmikroskopische Oberflächenkristall-Belegungsgrad wird wie folgt bestimmt:
Es wird ein Lichtmikroskop, beispielsweise das Modell SteREO Discovery.V20 der Firma Zeiss mit einer Zeiss AxioCam MRc Kamera und einem Zeiss 60N-C 2/3" 0,63x (426113) Adapter für die Kamera, verwendet. Als Objektiv wird ein 30 mm Objektiv, beispielsweise ein Zeiss PlanApo S 1.5x FWD 30mm Objektiv, verwendet. Als Vergrößerungsstufe wird 225-fach gewählt. Die Messung soll mit einer Auflösung von 0,5 µm/Pixel bei einem Messfeld von 1388 x 1040 Pixel durchgeführt werden.

Die Untersuchung erfolgt in Durchlicht per Dunkelfeldbeleuchtung unter Verwendung einer Rundleuchte mit 60 mm Durchmesser. Es kann eine Zeiss CL 1500 ECO SteREO Lichtquelle verwendet werden. Für die Bildaufnahme kann beispielsweise die Software AxioVs40 V 4.8.2.0 verwendet werden. Für die Bildauswertung kann beispielsweise die Software Fiji 2.9.0 (Ausgabe von ImageJ2, quelloffen, https://imagej.net/) verwendet werden.

Für die Positionierung der Probe im Mikroskop kann es zweckmäßig sein, die Probe zuzuschneiden. So kann beispielsweise der gebogene Bereich mit einem Reststeg der ebenen Flächen mit einer Breite von 15 mm ausgeschnitten werden. Die Probe wird für die Messung zwischen Lichtquelle und Objektiv positioniert, so dass die zum Objektiv zeigende Seite im Fokus des Objektivs liegt. Die den Winkel α einschließende Seite wird in Richtung der Lichtquelle orientiert. Vor der Messung ist die Probe zu reinigen, um beispielsweise Staubpartikel und Fingerabdrücke von der Probe zu entfernen.

Pro Probe ist an drei verschiedenen Stellen auf der Probe jeweils eine Aufnahme mit dem Mikroskop vorzunehmen. Die Oberflächenkristall-Belegungsgrade dieser drei Stellen werden arithmetisch gemittelt, um so den Oberflächenkristall-Belegungsgrad der Probe zu bestimmen.

Die Aufnahmen zeigen aufgrund der Dunkelfeldbeleuchtung die Oberflächenkristalle als helle Punkte vor einem schwarzen Hintergrund. Die Aufnahmen werden in 8-bit-Graustufen umgewandelt. Per automatischer Tonwertkorrektur werden die Graustufen so angepasst, dass sie den gesamten 8-bit-Grauwertbereich belegen. Um den Hintergrund von den Oberflächenkristallen unterscheiden zu können erfolgt eine automatisierte Umwandlung der Grauwertbilder in Schwarz-Weiß-Bilder. Dies erfolgt mittels der Otsu-Grenzwert-Methode. Die schwarzen Pixel des Bildes entsprechen Stellen der Oberfläche ohne Oberflächenkristalle. Die weißen Pixel des Bildes entsprechen Stellen der Oberfläche mit Oberflächenkristallen. Das Verhältnis von weißen Pixeln zur Gesamtzahl der Pixel ergibt den Oberflächenkristall-Belegungsgrad.

Der Oberflächenkristall-Belegungsgrad korreliert mit der wahrnehmbaren Trübung des gebogenen Bereichs.

Neben dem Verfahren betrifft die Erfindung eine gebogene Glaskeramikscheibe mit einer ersten Seitenfläche, einer zweiten Seitenfläche und einem Mittenbereich, wobei die Glaskeramikscheibe zumindest einen gebogenen Abschnitt aufweist. An den gebogenen Abschnitt schließen sich zwei ebene Flächen an, die aufgrund der Verbindung über den gebogenen Abschnitt zueinander einen Winkel α von wenigstens 20° und höchstens 175° einschließen.

In einer Weiterbildung der Erfindung schließen die beiden ebenen Flächen einen Winkel α von 55° bis 160°, bevorzugt von 80° bis 145° und besonders bevorzugt von 85° bis 140° ein.

Die Glaskeramikscheibe enthält Zinnoxid, insbesondere weist sie einen Gehalt an Zinnoxid im Bereich von 0,01 bis 0,9 Gew.-% auf. In einer Weiterbildung der Erfindung enthält die Glaskeramikscheibe einen Zinnoxidgehalt von 0,02 bis 0,6 Gew.-%, bevorzugt 0,04 bis 0,5 Gew.-%, besonders bevorzugt 0,06 bis 0,3 Gew.-%.

In diesen Mengen ist das Zinnoxid in der Schmelze als Läutermittel wirksam. Beim Überschreiten dieser Mengen kann es jedoch zur unerwünschten Entglasung während der Heißformgebung kommen. Durch das Zinnoxid kann auf weniger umweltverträgliche Läutermittel, insbesondere As₂O₃ und Sb₂O₃ verzichtet werden. Vorzugsweise enthält die Glaskeramik weniger als 0,1 Gew.-% As₂O₃ und weniger als 0,1 Gew.-% Sb₂O₃.

Die Glaskeramikscheibe weist im Bereich der ebenen Flächen auf der ersten Seitenfläche, der zweiten Seitenfläche oder auf beiden Seitenflächen in einem Abstand von wenigstens 10 mm zum gebogenen Abschnitt wenigstens abschnittsweise eine native Oberfläche auf. Insbesondere sind die ebenen Flächen der Glaskeramikscheibe nicht poliert. Dies hat den Vorteil, dass die Oberfläche nicht durch Polierriefen verletzt ist und deshalb eine verbesserte Festigkeit aufweist.

In einer Weiterbildung der Erfindung weist die Glaskeramikscheibe im Bereich der nativen Oberfläche eine Rauheit Ra von 0,02 - 0,5 µm auf. Mithin sind Kratzer auf einer polierten Oberfläche deutlicher sichtbar als auf Oberflächen mit der Rauheit Ra von 0,02-0,5 µm. Dies ist gerade in der Verwendung als Kaminsichtscheibe vorteilhaft, da diese bei der Reinigung von Verbrennungsrückständen verkratzt werden können. Zusätzlich hat eine solche Rauheit den Effekt, dass die Oberfläche eine geringere Spiegelwirkung hat. Im Falle von Kaminsichtscheiben kann durch diese Rauheit deswegen eine bessere Sichtbarkeit der Flamme gewährleistet werden.

Im gebogenen Abschnitt weist die Glaskeramikscheibe einen lichtmikroskopischen Oberflächenkristall-Belegungsgrad von weniger als 20 % auf. In einer Weiterbildung der Erfindung weist die Glaskeramikscheibe im gebogenen Abschnitt einen Belegungsgrad von weniger als 15 %, weniger als 10 %, weniger als 5 % oder sogar weniger als 2 % auf. Durch den niedrigen Belegungsgrad wird eine niedrige Trübung im gebogenen Abschnitt erreicht. Je niedriger der Belegungsgrad ist, desto geringer ist die wahrnehmbare Trübung im gebogenen Abschnitt.

Die Glaskeramikscheibe kann einen Oberflächenkristall-Belegungsgrad von mehr als 0,01 %, mehr als 0,1 %, mehr als 0,2 % oder sogar mehr als 0,5 % aufweisen, ohne dass eine Trübung an der Biegekante wahrnehmbar wäre. Es ist wirtschaftlich vorteilhaft, wenn zumindest ein geringer Oberflächenkristall-Belegungsgrad vorhanden ist, da es technisch sehr aufwändig ist, Oberflächenkristalle vollständig zu vermeiden. Dabei sollte der Belegungsgrad jedoch so gering wie nötig gehalten werden, um eine unerwünschte Trübung zu vermeiden.

In einer Weiterbildung der Erfindung weist die Glaskeramik im Bereich der ebenen Flächen einen Lichttransmissionsgrad gemäß DIN EN 410 von wenigstens 20 %, 25 %, 30 %, 35 %, 40 %, 45 %, 50 %, 55 %, 60 %, 65 %, 70 %, 75 % oder sogar 80 % und höchstens 90 %, 89 %, 88%, 87 % oder sogar 76 % auf. Dieser Transmissionswert bezieht sich auf die unbeschichtete Glaskeramik. Darüber hinaus kann die Glaskeramik Beschichtungen aufweisen, die die Transmission gegenüber dem Wert der unbeschichteten Glaskeramik lokal oder vollflächig erhöhen, z.B. entspiegelnde Schichten, oder reduzieren, z.B. absorbierende oder reflektierende Schichten.

Eine Weiterbildung sieht vor, dass die Glaskeramikscheibe zwei oder mehr gebogene Abschnitte mit wenigstens einer dazwischenliegenden, ebenen Fläche aufweist.

Gemäß einer Weiterbildung der Erfindung handelt es sich bei der Glaskeramikscheibe um eine Lithiumaluminiumsilikat-Glaskeramik. Vorzugsweise enthält die Glaskeramikscheibe folgende Komponenten in Gew.-%:

| | |
|---|---|
| SiO₂ | 55-70 |
| Al₂O₃ | 15-25 |
| Li₂O | 1-5 |
| Na₂O + K₂O | 0-3 |
| MgO + CaO +SrO + BaO | 0-5 |
| ZnO | 0-4 |
| TiO₂ | 0-5 |
| ZrO₂ | 0-5 |
| SnO₂ | 0,01 - 0,9 |
| TiO₂ + ZrO₂ + SnO₂ | 1-6 |

Gemäß einer Ausführungsform weist die Glaskeramikscheibe folgende Zusammensetzung in Gew.-% auf:

| | |
|---|---|
| SiO₂ | 57-69 |
| Al₂O₃ | 16-24 |
| Li₂O | 2-5 |
| Na₂O + K₂O | 0,3-2,5 |
| MgO + CaO +SrO + BaO | 1-4 |
| ZnO | 0,1-4 |
| TiO₂ | 0,1-4 |
| ZrO₂ | 0,1-5 |
| SnO₂ | 0,02-0,6 |
| TiO₂ + ZrO₂ + SnO₂ | 2-6 |

Eine weitere Ausführungsform sieht vor, dass die Glaskeramikscheibe folgende Zusammensetzung in Gew.-% aufweist:

| | |
|---|---|
| SiO₂ | 57-68 |
| Al₂O₃ | 17-23 |
| Li₂O | 2,5-4,5 |
| Na₂O + K₂O | 0,5-2,0 |
| MgO + CaO +SrO + BaO | 1-4 |
| ZnO | 0,2-3 |
| TiO₂ | 0,2-3 |
| ZrO₂ | 0,2-5 |
| SnO₂ | 0,04 - 0,5 |
| TiO₂ + ZrO₂ + SnO₂ | 2-5 |

Insbesondere die oben beschriebenen LAS-Gläser bzw. Glaskeramiken haben sich hinsichtlich ihrer Prozessierbarkeit sowie ihrer Eigenschaften, insbesondere in Hinblick auf ihre Festigkeit, als besonders vorteilhaft herausgestellt.

Hierfür eignen sich besonders Dicken von beispielsweise 3 mm, 3,5 mm, 4 mm, 4,5 mm, 5 mm, 5,5 mm 6 mm oder 6,5 mm. Die Scheibe sollte vorzugsweise nicht dicker als 10 mm sein. Je dicker die Scheibe ist, desto länger dauert das Aufheizen und desto mehr Energie wird für das Aufheizen benötigt. Beides ist wirtschaftlich nachteilig. Dünnere Scheiben haben tendenziell eine geringere mechanische Festigkeit. In einer Weiterbildung der Erfindung hat die Scheibe deshalb eine Dicke von 2 mm bis 10 mm, bevorzugt von 2,5 bis 8 mm, besonders bevorzugt von 3 mm bis 7 mm oder sogar von 3,5 mm bis 6,5 mm.

Die gebogene Glaskeramikscheibe weist vorzugsweise einen äußeren Biegeradius des gebogenen Abschnitts von weniger als 100 mm, vorzugsweise weniger als 70 mm, besonders bevorzugt weniger als 50 mm, noch mehr bevorzugt weniger als 30 mm und mindestens das 1,5-fache der Dicke der Scheibe, vorzugsweise mindestens das 2-fache der Dicke der Scheibe auf.

Die erfindungsgemäße Glaskeramik kann mittels des erfindungsgemäßen Verfahrens hergestellt werden.

Die erfindungsgemäße Glaskeramik kann als Kaminsichtscheibe verwendet werden.

Die erfindungsgemäße Glaskeramik kann Beschichtungen aufweisen. Insbesondere kann sie auf der Außenseite und/oder der Innenseite eine Beschichtung aufweisen. Beschichtungen können beispielsweise Dekor-Beschichtungen wie undurchsichtige Rahmen sein. Auf die Glaskeramiken können auch Logos oder andere Symbole aufgedruckt sein, insbesondere mittels Siebdrucks oder Tintenstrahldrucks. Die Glaskeramik kann auch funktionelle Beschichtungen aufweisen wie beispielsweise Infrarot-reflektierende Beschichtungen, Antireflexbeschichtungen oder Verspiegelungen. Funktionelle Beschichtungen werden üblicherweise auf der Außenseite der Glaskeramik aufgebracht. Antireflexbeschichtungen werden üblicherweise auf beiden Seiten der Glaskeramik aufgebracht.

### Detaillierte Beschreibung der Erfindung

Nachfolgend wird die Erfindung anhand von Ausführungsbeispielen sowie der Figuren 1 bis 7 näher erläutert. Es zeigen:
- Fig. 1: eine schematische Darstellung eines Querschnitts durch eine Glaskeramikplatte,
- Fig. 2: eine schematische Darstellung einer gebogenen Glaskeramikplatte,
- Fig. 3: die schematische Darstellung der Verfahrensschritte c) und d),
- Fig. 4: eine schematische Darstellung einer gebogenen Glasplatte sowie einer Vorrichtung zur Keramisierung der Glasplatte,
- Fig. 5 und 6: Flächenhöhenprofile unterschiedlich behandelter Glaskeramikoberflächen und
- Fig. 7: eine Weißlichtinterferometeraufnahme und das daraus ermittelte Höhenprofil einer maschinell polierten Glaskeramikoberfläche.

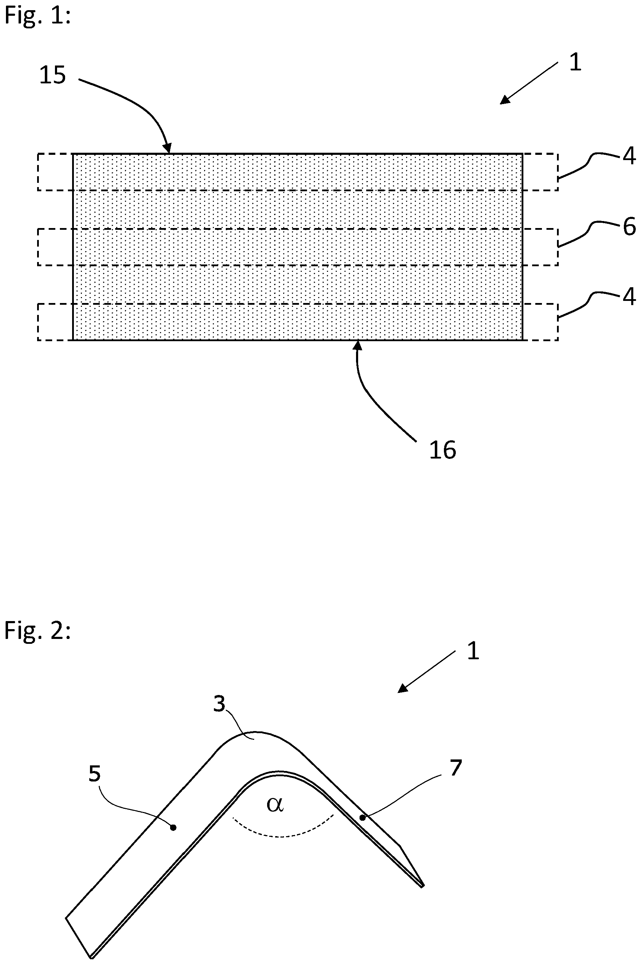

Fig. 1 zeigt eine schematische Darstellung eines Querschnitts durch eine Glaskeramikplatte 1. Die Glaskeramikplatte 1 weist die beiden Seitenflächen 15 und 16 auf. Der oberflächennahe Bereich 4 des Glases grenzt an die Seitenflächen 15, 16 an. Das Glasinnere bzw. der innere Glaskeramikbereich 6 liegt zwischen den oberflächennahen Bereichen 4.

In Fig. 2 wird ein Ausführungsbeispiel einer gebogenen Glaskeramikscheibe 1 schematisch dargestellt. Die Glaskeramikscheibe 1 weist einen gekrümmten Bereich 3 sowie zwei ebene Flächen 5, 7 auf. Die ebenen Flächen 5, 7 schließen den Winkel α ein. Dieser liegt bei ca. 90°, also im Bereich 20° bis 175 °. Die Rauheit Ra der Flächen 5,7 ist größer als 0,02 µm und kleiner als 0,5 µm.

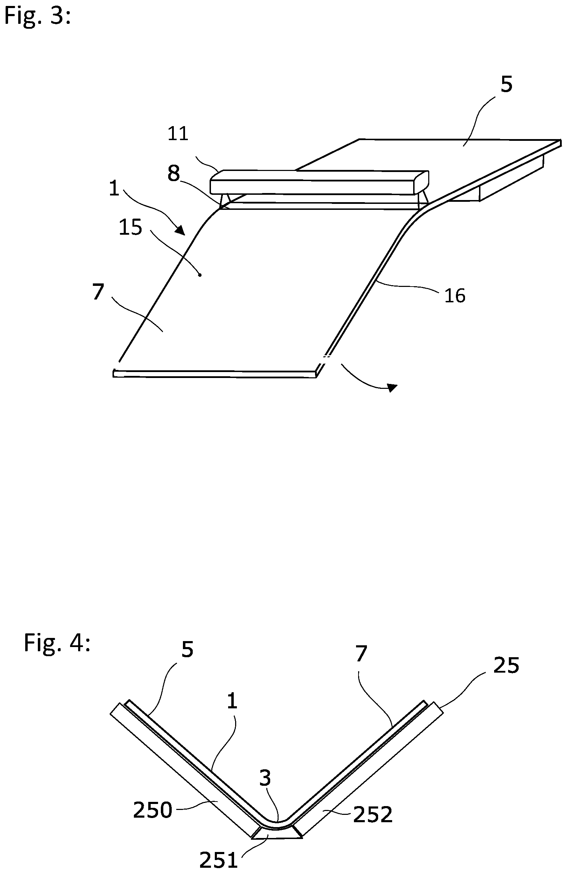

In Fig. 3 werden schematisch die Verfahrensschritte c) und d) einer weiteren Ausführungsform dargestellt. In Schritt c) wird ein sich von der einen Kante der Glasplatte 1 erstreckender Streifen 8 zunächst durch einen Laser 11 erwärmt. Die ebene Fläche 5 der Glasplatte liegt auf einer Unterlage, während die ebene Fläche 7 gemäß Verfahrensschritt d) einer Biegebewegung nach unten, dargestellt durch den Pfeil, ausgesetzt wird, bis der gewünschte Winkel α zwischen den beiden ebenen Flächen 5, 7 erreicht wird. Der erwärmte Streifen 8 stellt hierbei den Biegebereich dar. Die Seitenfläche des Glases, die näher am Laser 11 positioniert ist, d.h. die Seitenfläche 15, bildet die äußere Seitenfläche der gebogenen Glasplatte 1, während die innere Seitenfläche der gebogenen Glasplatte 1 durch die Seitenfläche 16 gebildet wird.

Fig. 4 stellt schematisch eine Vorrichtung 25 dar, mit der eine gebogene Glasscheibe 1 keramisiert und somit in die entsprechende Glaskeramikscheibe überführt werden kann. Die Vorrichtung 25 weist hierbei eine Auflagefläche 251 für den gebogenen Bereich 3 der Glasplatte 1 sowie die Auflageflächen 250, 252 für die ebenen Flächen 5, 7 auf.

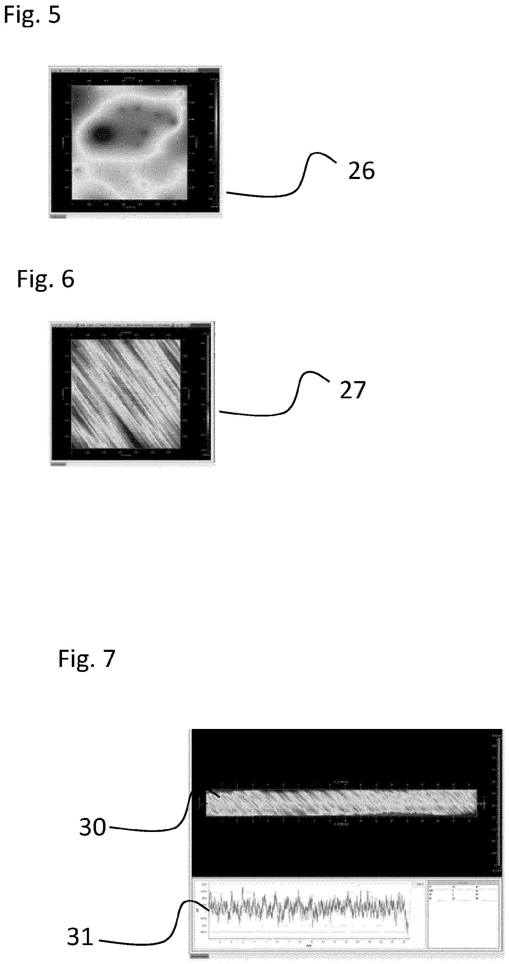

Die Fig. 5 bis 7 zeigen den Einfluss einer Maschinenpolitur auf die Glaskeramikoberfläche. Als Vergleichsprobe diente hierbei eine native Oberfläche einer unbearbeiteten, d.h. lediglich gewalzten Glaskeramik. Zur Präparation wurden die Probenoberflächen mit Ethanol und einem fusselfreien Tuch gereinigt, lose anhaftende Partikel wurden mit Luft abgepustet. Als Messmethode wurde Weißlichtinterferenzmikroskopie (WLI) eingesetzt.

Hierzu erfolgen zunächst Einzelmessungen mit einem 50x Objektiv an 5 Positionen pro Probe. Die Größe des Messfensters betrug 336 µm x 336 µm, die laterale Auflösung des Objektivs 0,52 µm.

In den Fig. 5 und 6 sind Einzelaufnahmen der Weißlichtinterferenzmikroskopie abgebildet. In Fig. 5 ist die Aufnahme 26 einer nativen, also unbehandelten, gewalzten Glaskeramikplatte abgebildet. Die Höhenunterschiede sind hierbei durch die Walzenstruktur bedingt. Es sind keine Polierriefen zu erkennen. Die in Fig. 6 gezeigte Aufnahme 27 zeigt die Oberfläche einer gewalzten und dann maschinenpolierten Glaskeramikoberfläche. Hier sind deutlich die Polierriefen bzw. -rillen zu erkennen. Weiterhin erfolgte für die maschinenpolierte Probe die Aufnahme eines Höhenprofils durch Vermessung eines 17,5 mm langen, horizontal orientierten Stitch (Image Stitching aus mehreren Einzelaufnahmen) mit einem 10x Objektiv. Die laterale Auflösung des Objektivs betrug 0,95 µm. Fig. 7 zeigt die Weißlichtinterferenzaufnahmen 30, 31 eines 17,5 mm Stitches einer maschinenpolierten Glaskeramikoberfläche. Um die Eigenstruktur der Oberfläche, insbesondere deren Welligkeit, auszublenden, wurde hierbei eine Filterung mit einem 1000 µm Hochpassfilter vorgenommen. Aufnahme 30 und Höhenprofil 31 zeigen hierbei deutlich die Politurspuren.

### Als Beispiel wurde folgende Glaskeramik hergestellt:

Es wurde eine keramisierbare Glasscheibe in einem Format von 130 x 200 x 4 mm³ mit den folgenden Komponenten in Gew.-% bereitgestellt:

| | |
|---|---|
| SiO₂ | 66,5 |
| Al₂O₃ | 21,5 |
| Li₂O | 3,7 |
| Na₂O + K₂O | 0,7 |
| MgO + CaO +SrO + BaO | 1,6 |
| ZnO | 1,7 |
| TiO₂ | 2,2 |
| ZrO₂ | 1,8 |
| SnO₂ | 0,3 |
| TiO₂ + ZrO₂ + SnO₂ | 4,3 |

Die Scheibe wurde in eine Biegevorrichtung entsprechend Fig. 3 eingebaut und auf 655 °C erwärmt. Anschließend wurde die Glasscheibe mittels eines CO₂-Lasers mit 2D-Ablenkeinheit (Galvo-Scanner) entlang eines Streifens 8 bis zur Erweichungstemperatur aufgeheizt. Dafür wurde eine Laserleistung von 2000 W bei einem Brennfleckdurchmesser von 8 mm und einer Scangeschwindigkeit von 1000 mm/s verwendet. Als Scankontur wurden 2 parallele Linien im Abstand von 4 mm mit einer überlagerten Rotation des Brennflecks mit Durchmesser 7 mm und Frequenz 300 Hz abgefahren. Die Bestrahlungsdauer lag bei insgesamt 21 Sekunden. Daran anschließend wurde die Glasscheibe am erwärmten Streifen gebogen, bis die beiden ebenen Flächen 5,6 einen Winkel α von 90° einschlossen. Anschließend wurde die Glasscheibe auf Raumtemperatur abgekühlt und mit einem üblichen Keramisierungsverfahren keramisiert. Die Maximaltemperatur von 950 °C wurde dabei nicht überschritten, um die Bildung von Keatit-Mischkristallen zu vermeiden.

Der Oberflächenkristall-Belegungsgrad wurde im gebogenen Abschnitt der Glaskeramik gemessen. Der Belegungsgrad lag bei 1,4 %. Es war keine Trübung wahrnehmbar.

Da die Scheibe nach dem Walzen keiner nachfolgenden Oberflächenbehandlung unterzogen wurde, wies sie im Bereich der ebenen Flächen eine native Oberfläche auf. Die Rauheit der nativen Oberfläche im Bereich der ebenen Flächen lag bei 0,09 µm für ebene Fläche 5 und bei 0,11 µm für ebene Fläche 7.

## Patentansprüche

1. Verfahren zur Herstellung einer gebogenen Glaskeramikscheibe (1), die zumindest zwei ebene Flächen (5,7) aufweist, die zueinander geneigt sind und an einen gebogenen Abschnitt (3) angrenzen,
wobei die Glaskeramikscheibe (1) im Bereich der ebenen Flächen (5, 7) in einem Abstand von wenigstens 10 mm zum gebogenen Abschnitt wenigstens abschnittsweise eine native Oberfläche, vorzugsweise mit einer Rauheit Ra von 0,02 - 0,5 µm, aufweist und
wobei die Glaskeramikscheibe (1) im gebogenen Abschnitt (3) einen lichtmikroskopischen Oberflächenkristall-Belegungsgrad von weniger als 20 % aufweist, umfassend zumindest die folgenden Schritte a) bis e) in der angegebenen Reihenfolge:
a) Bereitstellung einer keramisierbaren Glasscheibe mit einer Dicke von zumindest 2 mm, die Zinnoxid enthält,
b) optional Erwärmung der Glasscheibe auf eine Temperatur T unterhalb der Erweichungstemperatur der Glasscheibe,
c) Erwärmung eines sich von einer Kante auf die gegenüberliegende Kante erstreckenden Streifens der Glasscheibe mittels eines Lasers mindestens bis zur Erweichungstemperatur der Glasscheibe,
d) Biegen der Glasscheibe am erwärmten Streifen, so dass am Streifen eine Krümmung entsteht, so dass der Bereich der Krümmung einen gebogenen Abschnitt (3) darstellt und die an den gebogenen Abschnitt (3) angrenzenden ebenen Flächen (5, 7) zueinander geneigt sind, wobei die Glasscheibe so weit gebogen wird, bis die zwei ebenen Flächen (5, 7) zueinander einen Winkel α von wenigstens 20° und höchstens 175° einschließen,
e) Umwandeln der gebogenen Glasscheibe in eine gebogene Glaskeramikscheibe.

2. Verfahren gemäß Anspruch 1, wobei die zwei ebenen Flächen (5, 7) zueinander einen Winkel α von 55° bis 160°, bevorzugt von 80° bis 145° und besonders bevorzugt von 85° bis 140° aufweisen.

3. Verfahren gemäß einem der beiden vorstehenden Ansprüche, wobei die in Schritt a) bereit gestellte Glasscheibe 0,01 bis 0,9 Gew.-% Zinnoxid, bevorzugt 0,02 bis 0,6 Gew.-%, besonders bevorzugt 0,04 bis 0,5 Gew.-% oder sogar 0,06 bis 0,3 Gew.-% Zinnoxid enthält.

4. Verfahren gemäß einem der vorstehenden Ansprüche, wobei in Schritt c) ein CO₂-Laser oder ein Diodenlaser als Laser verwendet wird.

5. Verfahren gemäß einem der vorstehenden Ansprüche, wobei in Schritt c) der Streifen mit einer mittleren Flächenleistung des Lasers von 20 bis 250 W/cm², bevorzugt im Bereich von 30 bis 200 W/cm² bestrahlt wird.

6. Glaskeramikscheibe (1) mit einer ersten Seitenfläche (15) und einer zweiten Seitenfläche (16) und einem Mittenbereich (6), insbesondere als Sichtscheibe für einen Kaminofen, wobei die Glaskeramikscheibe (1) mindestens einen gebogenen Abschnitt (3) aufweist, an den sich zwei ebene Flächen (5, 7) anschließen, die aufgrund der Verbindung über den gebogenen Abschnitt (3) zueinander einen Winkel α von wenigstens 20° und höchstens 175° einschließen, wobei die Glaskeramikscheibe (1) Zinnoxid, insbesondere mehr als 0,01 Gew.-% und weniger als 0,9 Gew.-% Zinnoxid, enthält, wobei die Glaskeramikscheibe (1) im Bereich der ebenen Flächen (5, 7) auf der ersten Seitenfläche (15), der zweiten Seitenfläche (16) oder auf beiden Seitenflächen (15,16) in einem Abstand von wenigstens 10 mm zum Biegebereich wenigstens abschnittsweise eine native Oberfläche, vorzugsweise mit einer Rauheit Ra von 0,02 - 0,5 µm, aufweist und wobei die Glaskeramikscheibe (1) im gebogenen Abschnitt (3) einen lichtmikroskopischen Oberflächenkristall-Belegungsgrad von weniger als 20 % und vorzugsweise mehr als 0,01 % aufweist.

7. Glaskeramikscheibe gemäß dem vorstehenden Anspruch, wobei die ebenen Flächen (5, 7) der Glaskeramikscheibe (1) einen Winkel α von 55° bis 160°, bevorzugt von 80° bis 145° und besonders bevorzugt von 85° bis 140° einschließen.

8. Glaskeramikscheibe (1) gemäß einem der vorstehenden Ansprüche 6 oder 7, wobei die Glaskeramikscheibe (1) 0,02 bis 0,6 Gew.-%, bevorzugt 0,04 bis 0,5 Gew.-%, besonders bevorzugt 0,06 bis 0,3 Gew.-% Zinnoxid enthält.

9. Glaskeramikscheibe (1) gemäß einem der vorstehenden Ansprüche 6 bis 8, wobei die Glaskeramik folgende Komponenten in Gew.-% enthält:
| | |
|---|---|
| SiO₂ | 55-70 |
| Al₂O₃ | 15-25 |
| Li₂O | 1-5 |
| Na₂O + K₂O | 0-3 |
| MgO + CaO +SrO + BaO | 0-5 |
| ZnO | 0-4 |
| TiO₂ | 0-5 |
| ZrO₂ | 0-5 |
| SnO₂ | 0,01 - 0,9 |
| TiO₂ + ZrO₂ + SnO₂ | 1-6 |

10. Glaskeramikscheibe (1) gemäß Anspruch 9, wobei die Glaskeramikscheibe (1) folgende Komponenten in Gew.-% enthält:
| | |
|---|---|
| SiO₂ | 57-69 |
| Al₂O₃ | 16-24 |
| Li₂O | 2-5 |
| Na₂O + K₂O | 0,3-2,5 |
| MgO + CaO +SrO + BaO | 1-4 |
| ZnO | 0,1-4 |
| TiO₂ | 0,1-4 |
| ZrO₂ | 0,1-5 |
| SnO₂ | 0,02-0,6 |
| TiO₂ + ZrO₂ + SnO₂ | 2-6 |

11. Glaskeramikscheibe (1) gemäß Anspruch 10, wobei die Glaskeramikscheibe (1) folgende Zusammensetzung in Gew.-% enthält:
| | |
|---|---|
| SiO₂ | 57-68 |
| Al₂O₃ | 17-23 |
| Li₂O | 2,5-4,5 |
| Na₂O + K₂O | 0,5-2,0 |
| MgO + CaO +SrO + BaO | 1-4 |
| ZnO | 0,2-3 |
| TiO₂ | 0,2-3 |
| ZrO₂ | 0,2-5 |
| SnO₂ | 0,04 - 0,5 |
| TiO₂ + ZrO₂ + SnO₂ | 2-5 |

12. Glaskeramikscheibe (1) gemäß einem der vorstehenden Ansprüche 6 bis 11, **dadurch gekennzeichnet, dass** die Glaskeramikscheibe (1) eine Dicke von 2 mm bis 10 mm, bevorzugt von 2,5 bis 8 mm, besonders bevorzugt von 3 mm bis 7 mm oder sogar von 3,5 mm bis 6,5 mm aufweist.

13. Glaskeramikscheibe (1) gemäß einem der vorstehenden Ansprüche 6 bis 12, **gekennzeichnet durch** zwei gebogene Abschnitte mit einer dazwischenliegenden ebenen Fläche.

14. Glaskeramikscheibe (1) gemäß einem der vorstehenden Ansprüche 6 bis 13, mit einem äußeren Biegeradius des gebogenen Abschnitts von weniger als 100 mm, vorzugsweise weniger als 70 mm, besonders bevorzugt weniger als 50 mm, noch mehr bevorzugt weniger als 30 mm und mindestens das 1,5-fache der Dicke der Scheibe, vorzugsweise mindestens das 2-fache der Dicke der Scheibe.

15. Glaskeramikscheibe (1) gemäß einem der vorstehenden Ansprüche 6 bis 14 herstellbar mit einem Verfahren gemäß einem der Ansprüche 1 bis 5.
